# EUROPEAN PATENT APPLICATION

(11) **EP 3 517 274 A1**
(43) Date of publication of application: **31.07.2019**
(21) Application number: 18153280.5
(22) Date of filing: 24.01.2018
(51) Int. Cl.: B29C 64/357, B29C 64/153, B29C 64/165, B29C 64/255, B29C 64/307, B03C 1/23, B03C 1/247, B03C 3/00, B29C 64/35, B33Y 30/00, B33Y 40/00, B22F 3/105

(54) **APPARATUS FOR ADDITIVELY MANUFACTURING AT LEAST ONE THREE-DIMENSIONAL OBJECT FEATURING AN EDDY CURRENT PARTICLE SEPARATION DEVICE**

(71) Applicant: CL Schutzrechtsverwaltungs GmbH, 96215 Lichtenfels (DE)
(72) Inventor: Hofmann, Alexander, 96260 Weismain (DE); Stammberger, Jens, 96472 Rödental (DE)
(74) Representative: Hafner & Kohl

(57) **Abstract**

Apparatus (1) for additively manufacturing at least one three-dimensional object (2) by means of successive layerwise selective irradiation and consolidation of layers of build material (3) which can be consolidated by means of at least one energy beam (4), comprising:
- a process chamber (7) in which a process gas stream chargeable or charged with non-consolidated particulate build material is generated during operation of the apparatus (1);
- a streaming channel structure (16) comprising at least one streaming channel element (15) for a respective process gas stream the streaming channel element (15) communicating with a process gas stream inlet (9a) and/or a process gas stream outlet (9b) of the process chamber (7);
- a particle separation device (18) configured to separate non-consolidated build material from the process gas stream streaming through the at least one streaming channel element (15).

## Description

The invention relates to an apparatus for additively manufacturing at least one three-dimensional object by means of successive layerwise selective irradiation and consolidation of layers of build material which can be consolidated by means of at least one energy beam.

Respective apparatuses are known from the field of additive manufacturing and are configured to perform the characteristic successive layerwise selective irradiation and consolidation of layers of build material which can be consolidated by means of an energy beam. Well-known examples of respective apparatuses are selective electron beam melting apparatuses and selective laser melting apparatuses.

It is common to generate a process gas stream which streams through the process chamber of respective apparatuses, whereby it is charged with non-consolidated particulate build material, e.g. fume or smoke particles, generated during operation of respective apparatuses.

Having exited the process chamber via a process gas stream outlet of the process chamber, a respective process gas stream charged with respective non-consolidated particulate build material typically streams towards a filter device of the apparatus. Having entered the filter device via a process gas stream inlet of the filter device, the non-consolidated particulate build material can build residues in the filter element(s) which compromises filter efficiency of the filter device. This results in the requirement of frequent changes of respective filter elements. Changes of the filter elements require service intervals in which the apparatus cannot be operated.

It is generally, desirable to develop principles allowing for an improved removal of respective non-consolidated particulate build material from respective process gas streams.

It is particularly, desirable to develop principles allowing for an improved removal of respective non-consolidated particulate build material from respective process gas streams so as to avoid or reduce the requirements of respective service intervals, particularly for changing filter elements, in which the apparatus cannot be operated.

It is therefore, desirable to provide an approach which overcomes the above drawbacks, particularly by avoiding or reducing the requirements of respective service intervals, particularly for changing filter elements, in which the apparatus cannot be operated.

It is thus, the object of the invention to provide an apparatus for additively manufacturing three-dimensional objects allowing for an improved removal of respective non-consolidated particulate build material from respective process gas streams.

This object is achieved by an apparatus for additively manufacturing at least one three-dimensional object according to Claim 1. The claims depending on Claim 1 relate to possible embodiments of the apparatus according to Claim 1.

The apparatus described herein (hereinafter "apparatus") is an apparatus for additively manufacturing three-dimensional objects, e.g. technical components, by means of successive layerwise selective irradiation and consolidation of layers of a build material which can be consolidated by means of an energy beam. The build material may comprise at least one of a metal powder, a ceramic powder, or a polymer powder, for instance. The energy beam may be an electron beam or a laser beam, for instance. The apparatus can be a selective laser sintering apparatus, a selective laser melting apparatus, or a selective electron beam melting apparatus, for instance. Yet, it is also conceivable that the apparatus is a binder jetting apparatus, particularly a metal binder jetting apparatus, for instance.

The apparatus comprises at least one process chamber in which the successive layerwise selective irradiation and consolidation of layers of build material takes place. The process chamber typically, comprises a number of process chamber wall elements which delimit an inner space or volume, respectively. The process chamber typically, comprises a build material supply region, e.g. in the shape of a dose module, from which (fresh) build material is supplied, a build region, e.g. in the shape of a build module, in which the actual selective irradiation and consolidation of build material layers takes place, and a build material receiving region, e.g. in the shape of an overflow module, in which non-consolidated particulate build material is received.

During operation of the apparatus, a process gas stream which is chargeable or charged with non-consolidated particulate build material is generated in the process chamber. While streaming through the process chamber, i.e. between at least one process chamber inlet and at least one process chamber outlet, the process gas stream is charged with non-consolidated particulate build material so that respective non-consolidated particulate build material is removed from the process chamber via the process gas stream. Respective non-consolidated particulate build material may comprise fume particles and/or smoke particles generated in the process chamber of the apparatus during operation of the apparatus. Yet, respective non-consolidated particulate build material may also comprise build material particles from the build material receiving region. Hence, the process gas stream may be charged with fume particles and/or smoke particles generated in the process chamber of the apparatus during operation of the apparatus and with build material particles from the build material receiving region. In other words, the process gas stream may be charged with different fractions of non-consolidated particulate build material; typically, every fraction comprises non-consolidated particulate build material of a specific characteristic particle size range.

As indicated above, the process gas stream typically enters the process chamber at at least one process gas stream inlet of the process chamber and exits the process chamber at at least one process gas stream outlet of the process chamber. The process gas stream thus, typically streams between the at least one process gas stream inlet of the process chamber and the at least one process gas stream outlet of the process chamber. The at least one process gas stream inlet of the process chamber and the at least one process gas stream outlet of the process chamber are typically, provided at opposing sides of the process chamber.

The apparatus comprises a number of functional and/or structural devices which are operable or operated during its operation. Each functional and/or structural device may comprise a number of functional and/or structural units.

An exemplary functional and/or structural device is a streaming channel structure comprising at least one streaming channel element for a respective for a respective process gas stream. The at least one streaming channel element, which may be built as or comprise a hose, tube, or pipe, communicates with, i.e. is in connection with the or at least one process gas stream inlet of the process chamber and/or the or at least one process gas stream outlet of the process chamber. A respective streaming channel element typically, comprises hollow wall portions delimiting a streaming channel through which the process gas stream having exited the process chamber may stream.

Further, exemplary functional and/or structural devices are a build material application device, e.g. a recoating device, configured to apply a layer of build material which is to be selectively irradiated and consolidated in the build plane of the apparatus, an irradiation device configured to selectively irradiate and thereby, consolidate portions of a layer of build material with at least one energy beam, a stream generating device, e.g. a blowing and/or sucking device, particularly a pumping device, configured to generate a respective process gas stream streaming through the process chamber during operation of the apparatus, and a filter device configured to filter non-consolidated particulate build material from the process gas stream. The filter device may comprise a number of (active) filter elements. As will be apparent from below, the filter device may be particularly, configured to filter fume particles and/or smoke particles from the process gas stream, i.e. filter respective fractions of non-consolidated particulate build material having a comparatively small particle size.

The process chamber and the filter device may be connected via at least one streaming channel element of a streaming channel structure. The apparatus may thus, comprises a streaming channel structure comprising at least one, e.g. hose-, tube- and/or pipe-like, streaming channel element extending between the process chamber and the filter device, i.e. between the at least one process gas stream outlet of the process chamber and at least one process gas stream inlet of the filter device.
The apparatus further comprises at least one particle separation device configured to separate non-consolidated particulate build material from the process gas stream streaming through the at least one streaming channel element. The particle separation device is particularly, configured to separate respective build material particles from the build material receiving region from the process gas stream. The particle separation device is thus, particularly configured to separate respective fractions of non-consolidated particulate build material having a comparatively large particle size, such as respective build material particles from the build material receiving region, from the process gas stream.

Providing a respective particle separation device generally, allows for an improved removal of respective non-consolidated particulate build material from respective process gas streams. Further, by providing a (separate) particle separation device - which may be separate to the and thus, not to be confused with the (optional) filter device - the amount of non-consolidated particulate build material which is to be filtered by the filter device can be reduced. Since the amount of non-consolidated particulate build material which is to be filtered by the filter device can be reduced, the requirements for changing filter elements of the filter device is reduced as well. Hence, the requirements of respective service intervals, particularly for changing filter elements, in which the apparatus cannot be operated, are avoided or reduced, respectively.

The particle separation device is particularly, configured to generate a deflecting force acting upon the non-consolidated particulate build material streaming in the process gas stream, the deflecting force being capable of deflecting the non-consolidated particulate build material towards an inner wall portion of the streaming channel element. The particle separation device is thus, configured to affect the motion of non-consolidated particulate build material streaming in the process gas stream, particularly respective fractions of the non-consolidated particulate build material streaming in the process gas stream and having a comparatively large particle size, such as build material particles from the build material receiving region. Deflecting the non-consolidated particulate build material, particularly respective fractions of the non-consolidated particulate build material streaming in the process gas stream and having a comparatively large particle size, such as build material particles from the build material receiving region, towards an inner wall portion of the streaming channel element and thus, "arranging" or concentrating the non-consolidated particulate build material at an inner wall portion of the streaming channel element allows for an easier separation of the non-consolidated particulate build material from the process gas stream.

The particle separation device may be built as or comprise at least one eddy current separation device. Hence, the deflecting force may be generated on basis of magnetic interactions between the magnetic elements of the eddy current separation device and the (electrically conductive) non-consolidated particulate build material. As is generally known, a respective eddy current separation device comprises a number of magnetic elements, e.g. permanent magnets, which are rotatably supported around a rotational axis. By rotating the magnetic elements around the rotational axis, a rotating magnetic field is generated which induces eddy currents and thus, a magnetic field in the (electrically conductive) non-consolidated particulate build material. The non-consolidated particulate build material may thus, be separated by repulsive magnetic forces.

The particle separation device can be arranged at an outside, particularly at a freely exposed outer wall portion, of the streaming channel element. As such, the particle separation device may be attached to an outside, particularly to a freely exposed outer wall portion, of the streaming channel element. Yet, other attachment sites of the particle separation device are conceivable as well. Arrangement and attachment, respectively of the particle separation device is generally, chosen in such a manner that a respective deflecting force may act upon the non-consolidated particulate build material while streaming through the streaming channel element. In either case, there is no requirement that the particle separation device is arranged inside the streaming channel.

As is clear from the above, i.e. particularly the fact that the particle separation device may be configured to generate a respective deflecting force and the fact that the particle separation device may be arranged at an outside, particularly at a freely exposed outer wall portion, of the streaming channel element, the particle separation device does not (negatively) affect the streaming properties of the process gas stream streaming through the streaming channel element. Hence, separating non-consolidated particulate build material from the process gas stream does particularly, does not lead to a pressure loss of the process gas stream which is of advantage for operating/maintaining the process gas stream.

The streaming channel element may have a special cross-sectional geometry in the region of arrangement of the particle separation device. The special cross-sectional geometry of the streaming channel element can be chosen in such a manner that a respective deflection force may act upon the non-consolidated particulate build material with high efficiency. As such, the streaming channel element may e.g. have a rectangular or trapezoidal cross-sectional geometry in the region of arrangement of the particle separation device. Concrete dimensions of the cross-sectional geometry of the streaming channel element are typically, chosen under consideration of the dimensions of the particle separation device; for the exemplary embodiment of the particle separation device being built as or comprising an eddy current separation device, the dimensions, i.e. particularly the width, of the cross-sectional geometry of the streaming channel element may be adapted to the length of the rotational axis which is provided with the magnetic elements of the eddy current separation device.

In order to ease separation of the non-consolidated particulate build material from the process gas stream, the streaming channel element may be branched in the region of arrangement of the particle separation device, whereby a first streaming channel element branch extends towards the process gas stream inlet and/or the process gas stream outlet of the process chamber, particularly towards the process gas stream inlet of the filter device (if given), and a second streaming channel element branch extends towards a processing device configured to process of the non-consolidated particulate build material which was separated from the process gas stream by means of the particle separation device. The second streaming channel element branch may extend off the unbranched section of the streaming channel element in a certain inclination angle. The second streaming channel element branch may be at least partly oriented towards ground so that separation of the non-consolidated particulate build material from the process gas stream can be supported by gravity.

A respective processing device may be built as or comprise a build material recycling device configured to recycle separated non-consolidated particulate build material, particularly a build material recycling device of the apparatus, and/or a demagnetizing device configured to demagnetize separated non-consolidated particulate build material which was magnetized during separation via the particle separation device, particularly a demagnetizing device of the apparatus. Hence, the second streaming channel element branch may extend towards a build material recycling device configured to recycle separated non-consolidated particulate build material, particularly a build material recycling device of the apparatus, and/or towards a demagnetizing device configured to demagnetize separated non-consolidated particulate build material which was magnetized during separation via the particle separation device, particularly a demagnetizing device of the apparatus.

The apparatus may further comprise a detection device configured to detect the concentration of non-consolidated particulate build material in the process gas stream, particularly when streaming through the streaming channel element, and to generate a detection information indicating the detected concentration of non-consolidated particulate build material in the process gas stream. The detection device may particularly, be configured to detect the concentration of every fraction of non-consolidated particulate build material in the process gas stream; the detection device may thus, be configured to separately detect the concentration of respective fractions of non-consolidated particulate build material having a comparatively small particle size, such as fume particles and/or smoke particles generated in the process chamber of the apparatus during operation of the apparatus, and respective fractions of non-consolidated particulate build material having a comparatively large particle size, such as build material particles from the build material receiving region, from the process gas stream.

The detection device may comprise a number of detection elements, e.g. provided with the streaming channel element. Respective detection elements may be built as acoustic or optical detection elements allowing for an acoustic or optical detection of diverse concentration-dependent properties, e.g. streaming properties, of the process gas stream; i.e. respective properties, e.g. streaming properties, of the process gas stream may differ for different concentrations of non-consolidated particulate build material in the process gas stream allowing for deriving information on the concentration of non-consolidated particulate build material in the process gas stream or respective fractions of non-consolidated particulate build material in the process gas stream, respectively.

The apparatus may further comprise a hard- and/or software embodied control unit being configured to control operation of the particle separation device on basis of the detection information. Hence, operation of the particle separation device may be very efficiently controlled since the particle separation device may be (fully) operated only when a specific concentration, i.e. particularly a maximum or minimum threshold concentration, particularly of a specific fraction of non-consolidated particulate build material in the process gas stream, is reached.

The invention further relates to a particle separation device for an apparatus as specified above. The particle separation device is particularly configured to generate a deflecting force acting upon the non-consolidated particulate build material streaming in the process gas stream, the deflecting force being capable of deflecting the non-consolidated particulate build material towards an inner wall portion of the streaming channel element. The particle separation device may particularly, be built as or comprise at least one eddy current separation device. All annotations relating to the apparatus also apply to the particle separation device.

The invention also relates to a method for separating non-consolidated particulate build material from a process gas stream streaming through at least one streaming channel element communicating with a process gas stream inlet and/or a process gas stream outlet of the process chamber of an apparatus for additively manufacturing three-dimensional objects, particularly an apparatus as specified herein, wherein a particle separation device as specified herein is used for separating non-consolidated build material from the process gas stream streaming through the streaming channel element. All annotations relating to the apparatus also apply to the method.

Exemplary embodiments of the invention are described with reference to the Fig., whereby:
- Fig. 1: shows a principle drawing of an apparatus for additively manufacturing of three-dimensional objects according to an exemplary embodiment; and
- Fig. 2: show a principle drawing of the detail A of Fig. 1.

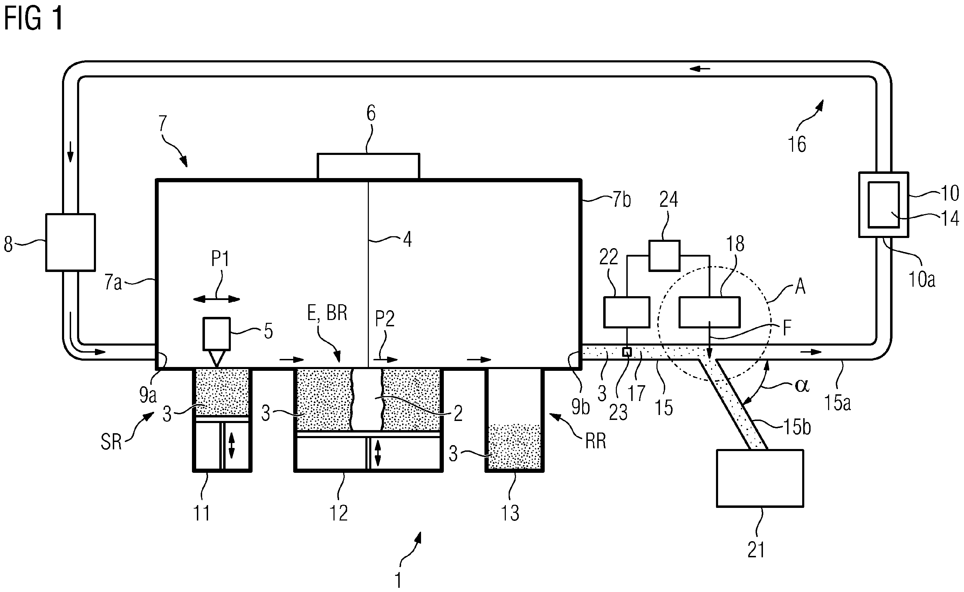

Fig. 1 shows a principle drawing of an exemplary embodiment of an apparatus 1 for additively manufacturing three-dimensional objects 2, e.g. technical components, by means of successive layerwise selective irradiation and accompanying consolidation of layers of a powdered build material 3, e.g. a metal powder, which can be consolidated by means of at least one energy beam 4 according to an exemplary embodiment. The energy beam 5 may be an electron beam or a laser beam, for instance. The apparatus 1 may thus, be embodied as a selective electron beam melting apparatus or as a selective laser melting apparatus, for instance.

The apparatus 1 comprises a process chamber 7. As is apparent from Fig. 1, the process chamber 7 may comprise a build material supply region SR, e.g. in the shape of a dose module 11, from which (fresh) build material 3 is supplied, a build region BR, e.g. in the shape of a build module 12, in which the actual selective irradiation and consolidation of build material layers takes place, and a build material receiving region RR, e.g. in the shape of an overflow module 13, in which non-consolidated particulate build material is received.

The apparatus 1 comprises a number of functional and/or structural devices which are operable and operated during its operation. Each functional and/or structural device may comprise a number of functional units. Operation of the functional and/or structural devices and the apparatus, respective is controlled by a (central) control device (not depicted).

Exemplary functional and/or structural devices of the apparatus 1 are a build material application device 5, e.g. a coating device, an irradiation device 6, a stream generating device 8, and a filter device 10 (optional).

The build material application device 5 is configured to apply layers of build material 3 in the build plane E of the process chamber 7 of the apparatus 1, the layers being selectively irradiated and consolidated during the additive build-up of the object 2. As indicated by the double-arrow P1, the build material application device 5 is moveably supported within the process chamber 7 of the apparatus 1.

The irradiation device 6 is configured to selectively irradiate and consolidate portions of layers of build material 3 with at least one energy beam 4 during the additive build-up of the object 2. The irradiation device 6 may comprise a beam generating unit (not shown) configured to generate at least one energy beam 4 and a beam deflecting unit (not shown), e.g. a scanner unit, configured to deflect an energy beam 4 to diverse positions within the build plane E of the apparatus 1.

The stream generating device 8 is adapted to generate a process gas stream streaming through the process chamber 7 of the apparatus 1 as indicated by arrows P2. The process gas stream may be an inert gas stream. While streaming through the process chamber 7, i.e. between a process gas stream inlet 9a of the process chamber 7 (provided at a first (side) wall 7a of the process chamber 7), and a process gas stream outlet 9b of the process chamber 7 (provided at a second (side) wall 7b of the process chamber 7 being opposite the first wall 7a of the process chamber 7), the process gas stream is charged with non-consolidated particulate build material so that respective non-consolidated particulate build material is removed from the process chamber 7 via the process gas stream.

Respective non-consolidated particulate build material may comprise fume particles and/or smoke particles generated in the process chamber 7 of the apparatus 1 during operation of the apparatus 1. Yet, respective non-consolidated particulate build material may also comprise build material particles from the build material receiving RR region. Hence, the process gas stream may be charged with fume particles and/or smoke particles generated in the process chamber 7 of the apparatus 1 during operation of the apparatus 1 and with build material particles from the build material receiving region RR. In other words, the process gas stream may be charged with different fractions of non-consolidated particulate build material; typically, every fraction comprises non-consolidated particulate build material of a specific characteristic particle size range.

The (optional) filter device 10 is configured to filter non-consolidated particulate build material from the process gas stream. The filter device 10 comprises a number of (active) filter elements 14. The filter device 10 is particularly, configured to filter fume particles and/or smoke particles from the process gas stream, i.e. filter respective fractions of non-consolidated particulate build material having a comparatively small particle size.

The process chamber 7 and the filter device 10 are connected via a, e.g. hose-, tube- and/or pipe-like, streaming channel element 15 of a streaming channel structure 16. The apparatus thus, comprises a streaming channel structure 16 comprising a, e.g. hose-, tube- and/or pipe-like, streaming channel element 15 extending between the process chamber 7 and the filter device 10, i.e. between the process gas stream outlet 9b of the process chamber 7 and a process gas stream inlet 10a of the filter device 10. The streaming channel element 15 generally, communicates with, i.e. is connected with, a process gas stream inlet 9a and/or a process gas stream outlet 9b of the process chamber 7.

The streaming channel element 15 comprises hollow wall portions delimiting a streaming channel 17 through which the process gas stream having exited the process chamber 7 may stream.

Notably, the apparatus 1 further comprises a particle separation device 18 configured to separate non-consolidated particulate build material from the process gas stream streaming through the streaming channel element 15. The particle separation device 18 is particularly, configured to separate respective build material particles from the build material receiving region RR from the process gas stream. The particle separation device 18 is thus, particularly configured to separate respective fractions of non-consolidated particulate build material having a comparatively large particle size, such as respective build material particles from the build material receiving region RR, from the process gas stream.

Hence, by providing a separate particle separation device 18 - which is separate to the and thus, not to be confused with the filter device 10 - the amount of non-consolidated particulate build material which is to be filtered by the filter device 10 is reduced. Since the amount of non-consolidated particulate build material which is to be filtered by the filter device 10 is reduced, the requirements for changing filter elements 14 of the filter device 10 is reduced as well. Hence, the requirements of service intervals, particularly for changing filter elements 14, in which the apparatus 1 cannot be operated, are avoided or reduced, respectively.

The particle separation device 18 is configured to generate a deflecting force indicated by arrow F acting upon the non-consolidated particulate build material streaming in the process gas stream along the particle separation device 18, the deflecting force being capable of deflecting the non-consolidated particulate build material towards an inner wall portion of the streaming channel element 15. The particle separation device 18 is thus, configured to affect the motion of non-consolidated particulate build material streaming in the process gas stream along the particle separation device 18, particularly respective fractions of the non-consolidated particulate build material streaming in the process gas stream and having a comparatively large particle size, such as build material particles from the build material receiving region RR. Deflecting the non-consolidated particulate build material, particularly respective fractions of the non-consolidated particulate build material streaming in the process gas stream and having a comparatively large particle size, such as build material particles from the build material receiving region RR, towards the inner wall portion of the streaming channel element 15 and thus, "arranging" or concentrating the non-consolidated particulate build material at an inner wall portion of the streaming channel element 15 allows for an easier separation of the non-consolidated particulate build material from the process gas stream.

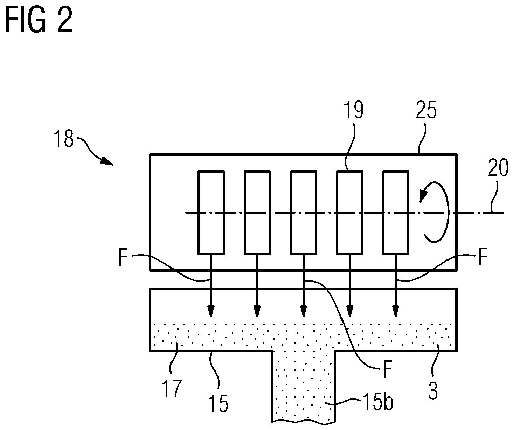

The particle separation device 18 may be built as or comprise at least one eddy current separation device. Hence, the deflecting force may be generated on basis of magnetic interactions between the magnetic elements 19 (see Fig. 2) of the eddy current separation device and the (electrically conductive) non-consolidated particulate build material. A respective eddy current separation device comprises a housing structure 25 having a number of magnetic elements 19, e.g. permanent magnets, which are rotatably supported around a rotational axis 20. By rotating the magnetic elements 19 around the rotational axis 20, a rotating magnetic field is generated which induces eddy currents and thus, a magnetic field in the (electrically conductive) non-consolidated particulate build material. The non-consolidated particulate build material may thus, be separated by repulsive magnetic forces.

As is apparent from the Fig., the particle separation device 18 can be arranged at an outside, particularly at a freely exposed outer wall portion, of the streaming channel element 15. The particle separation device 18 may be attached to an outside, particularly to a freely exposed outer wall portion, of the streaming channel element 15. Arrangement and attachment, respectively of the particle separation device 18 is generally, chosen in such a manner that a respective deflecting force may act upon the non-consolidated particulate build material streaming the process gas streaming along the particle separation device 18.

As is clear from the above, i.e. particularly the fact that the particle separation device 18 is configured to generate a respective deflecting force and the fact that the particle separation device 18 may be arranged at an outside, particularly at a freely exposed outer wall portion, of the streaming channel element 15, the particle separation device does not affect the streaming properties of the process gas stream streaming through the streaming channel element 15. Hence, separating non-consolidated particulate build material from the process gas stream does particularly, does not lead to a pressure loss of the process gas stream which is of advantage for operating/maintaining the process gas stream.

As is apparent from Fig. 2 showing show a principle drawing of the detail A of Fig. 1 in an enlarged cross-sectional view, the streaming channel element 15 may have a special cross-sectional geometry in the region of arrangement of the particle separation device 18. The special cross-sectional geometry, which may be a rectangular or trapezoidal cross-sectional geometry, for instance of the streaming channel element 15 is chosen in such a manner that a respective deflection force may act upon the non-consolidated particulate build material with high efficiency. Concrete dimensions of the cross-sectional geometry of the streaming channel element 15 are typically chosen under consideration of the dimensions of the particle separation device 18; for the exemplary embodiment of the particle separation device 18 being built as or comprising an eddy current separation device, the dimensions, i.e. particularly the width, of the cross-sectional geometry of the streaming channel element 15 may be adapted to the length of the rotational axis 20 which is provided with the magnetic elements 19 of the eddy current separation device (see Fig. 2).

As is apparent from Fig. 1, the streaming channel element 15 may be branched in the region of arrangement of the particle separation device 19, whereby a first streaming channel element branch 15a extends towards the process gas stream inlet 9a and/or the process gas stream outlet 9b of the process chamber 7, particularly the process gas stream inlet 10a of the filter device 10, and a second streaming channel element branch 15b extends towards a processing device 21 configured to process of the non-consolidated particulate build material which was separated from the process gas stream by means of the particle separation device 18. The second streaming channel element branch 15b may extend off the unbranched section of the streaming channel element 15 in a certain inclination angle α. The second streaming channel element branch 15b may be oriented towards ground so that separation of the non-consolidated particulate build material from the process gas stream can be supported by gravity.

A respective processing device 21 may be built as or comprise a build material recycling device configured to recycle separated non-consolidated particulate build material, particularly a build material recycling device of the apparatus 1, and/or a demagnetizing device configured to demagnetize separated non-consolidated particulate build material which was magnetized during separation via the particle separation device 18, particularly a demagnetizing device of the apparatus 1. Hence, the second streaming channel element branch 15b may extend towards a build material recycling device configured to recycle separated non-consolidated particulate build material and/or towards a demagnetizing device configured to demagnetize separated non-consolidated particulate build material which was magnetized during separation via the particle separation device.

The apparatus 1 may further comprise an optional detection device 22 configured to detect the concentration of non-consolidated particulate build material in the process gas stream, particularly when streaming through the streaming channel element 15, and to generate a detection information indicating the detected concentration of non-consolidated particulate build material in the process gas stream. The detection device 22 may particularly, be configured to detect the concentration of every fraction of non-consolidated particulate build material in the process gas stream; the detection device 22 may thus, be configured to separately detect the concentration of respective fractions of non-consolidated particulate build material having a comparatively small particle size, such as fume particles and/or smoke particles generated in the process chamber 7 of the apparatus 1 during operation of the apparatus 1, and respective fractions of non-consolidated particulate build material having a comparatively large particle size, such as build material particles from the build material receiving region RR, from the process gas stream.

The detection device 22 may comprise a number of detection elements 23, e.g. provided with the streaming channel element 15. Respective detection elements 23 may be built as acoustic or optical detection elements allowing for an acoustic or optical detection of diverse concentration-dependent properties, e.g. streaming properties, of the process gas stream; i.e. respective properties, e.g. streaming properties, of the process gas stream may differ for different concentrations of non-consolidated particulate build material in the process gas stream allowing for deriving information on the concentration of non-consolidated particulate build material in the process gas stream or respective fractions of non-consolidated particulate build material in the process gas stream, respectively.

The apparatus may further comprise a hard- and/or software embodied control unit 24 being configured to control operation of the particle separation device 18 on basis of the detection information. Hence, operation of the particle separation device 18 may be very efficiently controlled since the particle separation device 18 may be (fully) operated e.g. only when a specific concentration, i.e. particularly a maximum or minimum threshold concentration, particularly of a specific fraction of non-consolidated particulate build material in the process gas stream, is reached.

The apparatus 1 allows for implementing a method for separating non-consolidated build material from a process gas stream streaming through the at least one streaming channel element 15 communicating with a process gas stream inlet 9a and/or a process gas stream outlet 9b of a process chamber 7 of the apparatus 1, wherein a particle separation device 18 is used for separating non-consolidated build material from a process gas stream streaming through the streaming channel element 15.

## Claims

1. Apparatus (1) for additively manufacturing at least one three-dimensional object (2) by means of successive layerwise selective irradiation and consolidation of layers of build material (3) which can be consolidated by means of at least one energy beam (4), comprising:
- a process chamber (7) in which a process gas stream chargeable or charged with non-consolidated particulate build material is generated during operation of the apparatus (1);
- a streaming channel structure (16) comprising at least one streaming channel element (15) for a respective process gas stream the streaming channel element (15) communicating with a process gas stream inlet (9a) and/or a process gas stream outlet (9b) of the process chamber (7);
- a particle separation device (18) configured to separate non-consolidated build material from the process gas stream streaming through the at least one streaming channel element (15).

2. Apparatus according to Claim 1, **wherein** the particle separation device (18) is configured to generate a deflecting force acting upon the non-consolidated particulate build material streaming in the process gas stream, the deflecting force being capable of deflecting the non-consolidated particulate build material towards an inner wall portion of the streaming channel element (15).

3. Apparatus according to Claim 1 or 2, **wherein** the particle separation device (18) is built as or comprises at least one eddy current separation device.

4. Apparatus according to any of the preceding Claims, **further comprising** a filter device (10), whereby the streaming channel element (15) extends between a process gas stream outlet (9b) of the process chamber (7) and a process gas stream inlet (10a) of the filter device (10).

5. Apparatus according to any of the preceding Claims, **wherein** the particle separation device (18) is arranged at an outside, particularly at a freely exposed outer wall portion, of the streaming channel element (15).

6. Apparatus according to any of the preceding Claims, **wherein** the streaming channel element (15) has a rectangular or trapezoidal cross-section in the region of arrangement of the particle separation device (18).

7. Apparatus according to Claim 5 or 6, **wherein** the streaming channel element (15) is branched in the region of arrangement of the particle separation device (18), whereby a first streaming channel element branch (15a) extends towards the process gas stream inlet (9a) and/or the process gas stream outlet (9b) of the process chamber (7) and a second streaming channel element branch (15b) extends towards a processing device (21) configured to process the non-consolidated particulate build material which was separated from the process gas stream by means of the particle separation device (18).

8. Apparatus according to Claim 7, **wherein** the second streaming channel element branch (15b) extends towards a build material recycling device configured to recycle separated non-consolidated particulate build material, particularly a build material recycling device of the apparatus (1), and/or towards a demagnetizing device configured to demagnetize non-consolidated particulate build material which was magnetized during separation via the particle separation device, particularly a demagnetizing device of the apparatus (1).

9. Apparatus according to Claim 7 or 8, **wherein** the second streaming channel element branch (15b) is at least partly oriented towards ground.

10. Apparatus according to any of the preceding Claims, **further comprising** a detection device (22) configured to detect the concentration of non-consolidated particulate build material in the process gas stream and to generate a detection information indicating the detected concentration of non-consolidated particulate build material in the process gas stream.

11. Apparatus according to Claim 10, **further comprising** a control unit (24) being configured to control operation of the particle separation device (18) on basis of the detection information.

12. Particle separation device (18) for an apparatus (1) according to any of the preceding Claims, the particle separation device (18) being configured to separate non-consolidated build material from a process gas stream streaming through at least one streaming channel element (15) of the apparatus (1).

13. Method for separating non-consolidated particulate build material from a process gas stream streaming through at least one streaming channel element (15) communicating with a process gas stream inlet (9a) and/or a process gas stream outlet (9b) of the process chamber (7) of an apparatus (1) for additively manufacturing three-dimensional objects (2), particularly an apparatus according to any of Claims 1 - 11, , wherein a particle separation device (18) according to Claim 12 is used for separating non-consolidated build material from the process gas stream streaming through the streaming channel element (15).
